# EUROPEAN PATENT APPLICATION

(11) **EP 4 597 272 A1**
(43) Date of publication of application: **06.08.2025**
(21) Application number: 25154423.5
(22) Date of filing: 28.01.2025
(51) Int. Cl.: G06F 3/0354, G06F 3/038, G06F 3/041, G06F 3/044, G06F 3/046

(54) **STYLUS PEN**

(30) Priority: 01.02.2024 KR 20240016179; 26.09.2024 KR 20240131015
(71) Applicant: HiDeep, Inc., Gyeonggi-do 13493 (KR)
(72) Inventor: PAEK, Chong Kuk, Seongnam-si, Gyeonggi-do 13493 (KR); KIM, Ki Ung, Seongnam-si, Gyeonggi-do 13493 (KR); BYUN, Mun Sub, Seongnam-si, Gyeonggi-do 13493 (KR); JUNG, Kiryoung, Seongnam-si, Gyeonggi-do 13493 (KR)
(74) Representative: Manitz Finsterwald Patent- und Rechtsanwaltspartnerschaft mbB

(57) **Abstract**

A stylus pen according to an exemplary embodiment includes: an inductor unit; and a capacitor unit including a plurality of first capacitors connected to the inductor unit in parallel, a connection member including a first signal line connected to one end of each of the plurality of first capacitors, a movable member including a second signal line connected to the first signal line when contacting the connection member, a conductive elastic member connected to the second signal line, and a second capacitor connected between the elastic member and the other end of each of the plurality of first capacitors.

## Description

### CROSS-REFERENCE TO RELATED APPLICATION

This application claims priority to and the benefit of Korean Patent Application No. 10-2024-0016179 filed with the Korean Intellectual Property Office on February 01, 2024 and No. 10-2024-0131015 filed with the Korean Intellectual Property Office on September 26, 2024, the entire contents of which are incorporated herein by reference.

### BACKGROUND

### (a) Field of the Invention

The present disclosure relates to a stylus pen.

### (b) Description of the Related Art

Various terminals, such as mobile phones, smart phones, tablet PCs, laptop computers, digital broadcasting terminals, personal digital assistants (PDAs), portable multimedia players (PMPs), and navigation devices, are equipped with touch sensors.

In such a terminal, the touch sensor may be located on a display panel that displays an image, or may be located in an area of a terminal body. When a user interacts with the terminal by touching the touch sensor, the terminal may provide an intuitive user interface to the user.

The user may use a stylus pen for inputting a precise touch. Such a stylus pen may transmit and receive signals to and from the touch sensor in an electrical and/or magnetic manner.

### SUMMARY

The present disclosure attempts to provide a stylus pen capable of efficiently receiving and transmitting a magnetic signal from and to an electronic device.

An exemplary embodiment of the present disclosure provides a stylus pen including: an inductor unit; and a capacitor unit including a plurality of first capacitors connected to the inductor unit in parallel, a connection member including a first signal line connected to one end of each of the plurality of first capacitors, a movable member including a second signal line connected to the first signal line when contacting the connection member, a conductive elastic member connected to the second signal line, and a second capacitor connected between the elastic member and the other end of each of the plurality of first capacitors.

Another exemplary embodiment of the present disclosure provides a touch system including: a stylus pen including an inductor unit including an inductor connecting unit, and a capacitor unit including a movable member moved by the inductor connecting unit and an elastic member connected to the movable member at an upper end of the movable member; and a touch screen including a touch electrode layer receiving a resonate electromagnetic signal from the stylus pen.

Another exemplary embodiment of the present disclosure provides a stylus pen including: a capacitor area including a plurality of capacitors; an elastic member located at a lower end of the capacitor area and contacting the capacitor area; a movable member located at a lower end of the elastic member and connected between the elastic member and an inductor unit; a connection member formed to surround outer edges of the capacitor area, the elastic member, and the movable member; and a contact area where the movable member and the connection member come into contact with each other.

### BRIEF DESCRIPTION OF THE DRAWINGS

FIG. 1 is a conceptual diagram illustrating a stylus pen and an electronic device.
FIG. 2 is a schematic diagram illustrating a signal transmission operation between a stylus pen and an electronic device.
FIG. 3 is a schematic diagram illustrating a signal transmission operation between a stylus pen and an electronic device.
FIG. 4 is a schematic diagram illustrating a signal transmission operation between a stylus pen and an electronic device.
FIG. 5 is a diagram illustrating a stylus pen according to a comparative example.
FIG. 6 is a diagram illustrating elements included in a housing of a stylus pen according to a comparative example.
FIG. 7 is a diagram illustrating a state where a connection member and a movable member contact each other in a hovering state.
FIG. 8 is a circuit diagram of a stylus pen according to a comparative example.
FIG. 9 is a diagram illustrating a state in which a connection member and a movable member contact each other in a hovering state.
FIG. 10 is a circuit diagram of a stylus pen according to a comparative example.
FIG. 11 is a diagram illustrating a stylus pen according to an exemplary embodiment.
FIG. 12 is a diagram illustrating a stylus pen according to an exemplary embodiment.
FIG. 13 is a diagram illustrating a pen pressure sensing unit and a connection unit of a stylus pen.
FIG. 14 is a diagram illustrating a connection member.
FIG. 15 is a diagram illustrating a movable member.
FIG. 16 is a diagram illustrating a stylus pen in which a connection member and a movable member are in contact with each other according to an exemplary embodiment.
FIG. 17 is a circuit diagram of a stylus pen in a hovering state according to an exemplary embodiment.
FIG. 18 is a diagram illustrating a stylus pen in which a connection member and a movable member are in contact with each other according to an exemplary embodiment.
FIG. 19 is a circuit diagram of a stylus pen in a hovering state according to an exemplary embodiment.
FIG. 20 is a diagram illustrating a stylus pen in which a connection member and a movable member are separated from each other according to an exemplary embodiment.
FIG. 21 is a circuit diagram of a stylus pen in a contact state according to an exemplary embodiment.

### DETAILED DESCRIPTION OF THE EMBODIMENTS

Hereinafter, several exemplary embodiments of the present disclosure will be described in detail with reference to the accompanying drawings, so that they can be easily carried out by those having ordinary knowledge in the art to which the present disclosure pertains. The present disclosure may be implemented in various different forms, and is not limited to the exemplary embodiments described herein.

In order to clearly explain the present disclosure, parts irrelevant to the description will be omitted, and identical or similar components will be denoted by the same reference numerals throughout the specification.

Throughout the specification, when a certain part is referred to as "including" a certain component, this implies the presence of other components, not precluding the presence of other components, unless explicitly stated to the contrary.

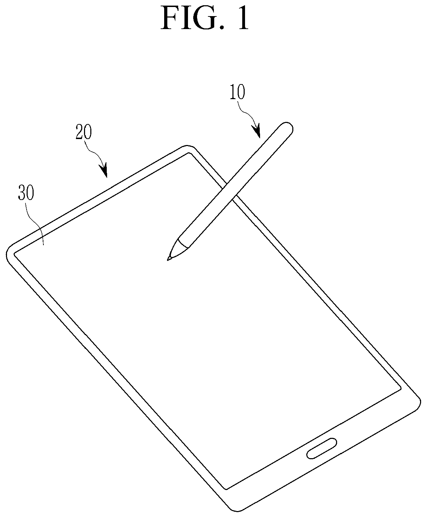

FIG. 1 is a conceptual diagram illustrating a stylus pen and an electronic device.

Referring to FIG. 1, a stylus pen 10 may receive a signal output from an electronic device 20 or a touch screen 30 near the touch screen 30 of the electronic device 20, and transmit a signal to the touch screen 30.

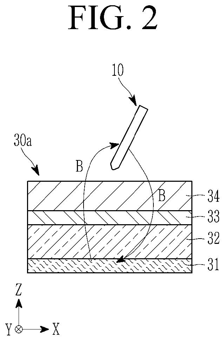

FIGS. 2 to 4 are schematic diagrams each illustrating a signal transmission operation between the stylus pen 10 of FIG. 1 and the electronic device 20 of FIG. 1.

Referring to FIG. 2, a touch screen 30a may include a digitizer 31, a display panel 32, a touch electrode layer 33, and a window 34. Concerning an electro-magnetic resonance (EMR) type pen among passive stylus pens, when the digitizer 31 transmits a magnetic signal B to the EMR-type stylus pen 10, a resonant circuit included in the stylus pen 10 may resonate based on the magnetic signal B. Then, the digitizer 31 may receive a resonant magnetic signal B from the stylus pen 10.

The digitizer 31 may be attached under the display panel 32, and may include a flexible printed circuit board (FPCB) where a plurality of conductive antenna loops are formed, and a ferrite sheet that blocks a magnetic field generated by the antenna loops and blocks an eddy current that may be generated in other electrical elements or components when the antenna loops form a magnetic field.

In the FPCB, a plurality of antenna loops for detecting a location to which a resonant signal is input may be formed in a plurality of layers. One antenna loop may overlap at least one other antenna loop in the Z-axis direction. Accordingly, the thickness of the FPCB increases, making it difficult to make the electronic device 20 thinner and smaller.

If such a digitizer 31 is mounted on a foldable/flexible electronic device 20, the FPCB attached to the foldable area of the foldable/flexible electronic device 20 may be deformed when the foldable/flexible electronic device 20 is folded. As the foldable/flexible electronic device 20 is repeatedly folded, this may cause stress to wiring members forming the antenna loops, ultimately resulting in damage to the wiring members. The ferrite sheet may block the influence of the magnetic field generated by the antenna loops on the inside of the electronic device 20. The ferrite sheet is also thick and is prone to deformation when the electronic device 20 is folded, and may be damaged as the electronic device 20 is repeatedly folded.

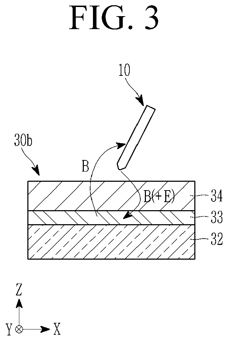

Referring to FIG. 3, a touch screen 30b may include a display panel 32, a touch electrode layer 33, and a window 34.

When an electrode of the touch electrode layer 33 transmits a magnetic signal B to the stylus pen 10, the resonant circuit included in the stylus pen 10 may resonate based on the magnetic signal B. The electrode of the touch electrode layer 33 may receive a resonant electromagnetic signal E and/or B from the stylus pen 10. In a case where the electrode of the touch electrode layer 33 is formed of a metal mesh having low resistance, a magnetic signal from the stylus pen 10 may be detected.

Similarly, when compared to the digitizer 31, the touchscreen 30b does not require an additional unit or module for transmitting a magnetic signal to the stylus pen 10, and accordingly, the touchscreen 30b can be made thin and is advantageous in terms of manufacturing cost.

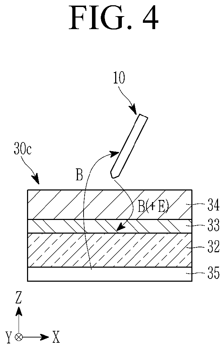

Referring to FIG. 4, a touch screen 30c may include a loop coil 35, a display panel 32, a touch electrode layer 33, and a window 34. When the loop coil 35 transmits a magnetic signal B to the stylus pen 10, the resonant circuit included in the stylus pen 10 may resonate based on the magnetic signal B. Then, an electrode of the touch electrode layer 33 may receive a resonant electromagnetic signal E and/or B from the stylus pen 10.

When compared to the digitizer 31, the loop coil 35 does not receive a magnetic signal B for detecting a touch position, and accordingly, the wiring structure is simple, making the touch screen 30c thin. This is advantageous in that the electronic device 20 can be made thin and small. In addition, the loop coil 35 may be formed in various sizes and at various positions, and accordingly, such a touch screen 30c may also be applied to the foldable/flexible electronic device 20.

The loop coil 35 may include a substrate where an antenna loop is located and a ferrite sheet. The antenna loop may be formed of a conductive material such as copper or silver. The antenna loop may be located on the same layer as the touch electrode layer 33 as well as the substrate. In this case, the antenna loop may be formed of a conductive material exhibiting high transmittance and low impedance, such as a metal mesh, ITO, graphene, or silver nanowire. In addition, the antenna loop may be located under the window. In this case, the substrate may not be included in the loop coil 35.

The touch electrode layer 33 may include a plurality of first touch electrodes for detecting touch coordinates in a first direction and a plurality of second touch electrodes for detecting touch coordinates in a second direction intersecting the first direction. Although the touch electrode layer 33 is illustrated as a single layer in FIG. 4, the first touch electrodes and the second touch electrodes may be positioned in different layers, may be positioned to overlap each other, may be positioned not to overlap each other, or may be positioned with a separate layer interposed therebetween, and are not limited thereto.

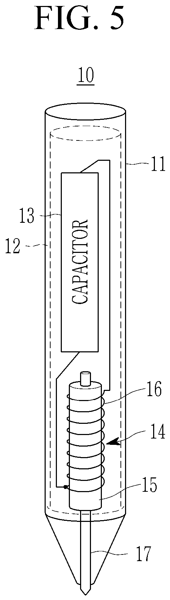

FIG. 5 is a diagram illustrating a stylus pen according to a comparative example.

Referring to FIG. 5, the stylus pen 10 may include a resonant circuit unit 12 within a housing 11. The resonant circuit unit 12 is an LC resonant circuit that may resonate with a driving signal output from the touch screen 30 of FIG. 1. The driving signal may include a signal (e.g., a sine wave or a square wave) having a frequency corresponding to a resonant frequency of the resonant circuit unit 12. For example, the resonant circuit unit 12 may resonate based on a magnetic signal B received from the digitizer 31 of FIG. 2, the touch electrode layer 33 of FIG. 3, or the loop coil 35 of FIG. 4. For resonance, it is required that the resonant frequency of the resonant circuit unit 12 and the frequency of the driving signal be the same or very similar. At this time, the resonant frequency of the stylus pen 10 follows the design value of the resonant circuit unit 12.

The elements included in the stylus pen 10 may be accommodated in the housing 11. The housing 11 may have a shape like a circular column, a polygonal column, a column having a curved surface in at least a portion thereof, an entasis, a frustum of a pyramid, a circular truncated cone, or the like, but is not limited thereto. Since the inside of the housing 11 is hollow, the elements of the stylus pen 10, such as the resonant circuit unit 12, may be accommodated inside the housing 11. Such a housing 11 may be made of a non-conductive material.

The resonant circuit unit 12 may include an inductor unit 14 and a capacitor unit 13. The inductor unit 14 may include a ferrite core 15 through which a core body 17 penetrates and a coil 16 wound around the outer surface of the ferrite core 15. In the ferrite core 15, for example, a through hole having a predetermined diameter (e.g., 1 mm) may be formed in the axial direction to allow the core body 17 to be inserted and pass through a ferrite material having a shape like, for example, a circular column. The coil 16 may be wound around the ferrite core 15 over its entire axial length or over its partial axial length. The coil 16 may be electrically connected to the capacitor unit 13.

The capacitor unit 13 may include a plurality of capacitors connected to each other in parallel. The plurality of capacitors may have different capacitances. The structure of the capacitor unit 13 may change based on pen pressure, which is pressure applied by the stylus pen 10 to the touch screen 30. For example, the capacitor unit 13 may determine a connection state of each of the plurality of capacitors based on the pen pressure.

One end of the core body 17 may be a pen tip protruding from the ferrite core 15. The core body 17 may be constituted by an electrode core made of a hard resin mixed with a conductor, e.g., a conductive metal or conductive powder.

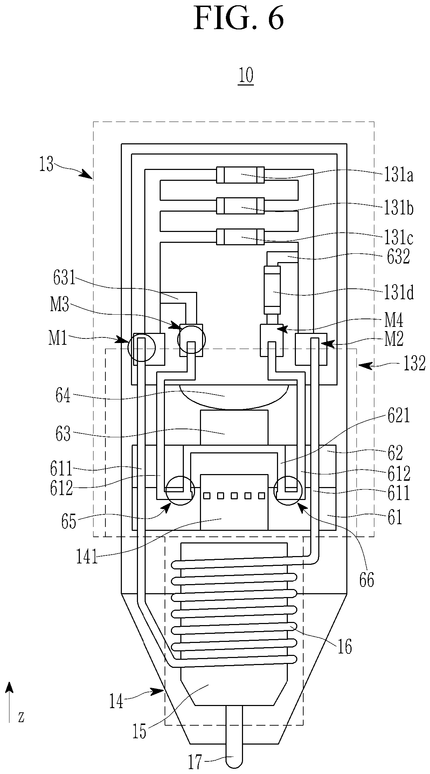

FIG. 6 is a diagram illustrating elements included in a housing of a stylus pen according to a comparative example.

Referring to FIG. 6, the stylus pen 10 may include a capacitor unit 13 and an inductor unit 14. The capacitor unit 13 may include a plurality of capacitors 131a, 131b, 131c, and 131d and a pen pressure sensing unit 132. A capacitance of the capacitor unit 13 may be calculated by adding the respective capacitances of the plurality of capacitors 131a, 131b, 131c, and 131d. The number of the plurality of capacitors 131a, 131b, 131c, and 131d for calculating the capacitance of the capacitor unit 13 may be determined based on a movement of the pen pressure sensing unit 132. Accordingly, the capacitance of the capacitor unit 13 is changed based on the movement of the pen pressure sensing unit 132, and the resonant frequency of the resonant circuit unit 12 may be changed by the changed capacitance.

The plurality of capacitors 131a, 131b, 131c, and 131d may be positioned at an upper end of the capacitor unit 13 in the first axis (Z) direction. Among the plurality of capacitors 131a, 131b, 131c, and 131d, first capacitors 131a, 131b, and 131c may be connected to each other in parallel between a first contact M1 connected to one end of the inductor unit 14 and a second contact M2 connected to the other end of the inductor unit 14. Among the plurality of capacitors 131a, 131b, 131c, and 131d, one end of a second capacitor 131d may be connected to the pen pressure sensing unit 132, and the other end of the second capacitor 131d may be connected to the contact M2 to which the other end of the inductor unit 14 is connected.

The pen pressure sensing unit 132 may release connection of the second capacitor 131d connected to the first capacitors 131a, 131b, and 131c in parallel, based on pen pressure, which is pressure applied by the stylus pen 10 to the touch screen 30 of FIG. 1. The pen pressure sensing unit 132 brought into contact with the core body 17 in the first axis (Z) direction may be moved by the pressure applied to the core body 17 by the touch screen 30 of FIG. 1. When the pen pressure sensing unit 132 moves, the second capacitor 131d may be disconnected from the first capacitors 131a, 131b, and 131c. The pen pressure sensing unit 132 may include a connection member 61, an inductor connecting unit 141, a movable member 62, and movement limiting members 63 and 64.

The connection member 61 may include a portion of a first signal line 611 and a portion of a second signal line 612. The first signal line 611 may connect the first contact M1 and one end of the inductor unit 14, and connect a fourth contact M4 and the other end of the inductor unit 14. The second signal line 612 may connect a third contact M3 and one end of a third signal line 621, and connect the fourth contact M4 and the other end of the third signal line 621. At this time, the third contact M3 may be connected to the first contact M1 through a fourth signal line 631, and the fourth contact M4 may be connected to the second contact M2 through a fifth signal line 632. The first capacitors 131a, 131b, and 131c may be connected to each other in parallel between the first contact M1 and the fourth contact M4. The second capacitor 131d may be disposed on the fifth signal line 632, and connected in series between the second contact M2 and the fourth contact M4.

The connection member 61 may include a cavity inside. Through the cavity, the inductor connecting unit 141 may move in the first axis (Z) direction.

The inductor connecting unit 141 may move the movable member 62 in the first axis (Z) direction. When the stylus pen 10 applies pressure to the touch screen 30, the pressure transmitted to the core body 17 is transmitted to the movable member 62 through the inductor connecting unit 141, and the movable member 62 may move in the first axis (Z) direction. The inductor connecting unit 141 may penetrate through the connection member 61, and may be connected to the movable member 62. One end of the inductor connecting unit 141 may be connected to the core body 17. The other end of the inductor connecting unit 141 may be physically connected to the movable member 62 by penetrating through the connection member 61.

The movable member 62 may include the third signal line 621. In a state where the movable member 62 and the connection member 61 are in contact with each other, the third signal line 621 may be electrically connected to the second signal line 612 and the first signal line 611. At this time, the third signal line 621 may be electrically connected to the second signal line 612 in a first contact area 65 and a second contact area 66. In a state where the movable member 62 and the connection member 61 are in contact with each other, one end of the second capacitor 131d may be connected to one end of the inductor unit 14 through the third contact M3, the fourth signal line 631, and the first contact M1.

The position of the movable member 62 may be changed based on pen pressure of the stylus pen 10. The movable member 62 may be brought into contact with the connection member 61 in the first axis (Z) direction of the connection member 61. When the stylus pen 10 applies pressure to the touch screen 30, the core body 17 may move the movable member 62 through the inductor connecting unit 141 in the first axis (Z) direction. At this time, the movable member 62 moved in the first axis (Z) direction may be separated from the connection member 61.

The third signal line 621 and the first and second signal lines 611 and 612 may be electrically disconnected from each other while the movable member 62 and the connection member 61 are separated. In a state where the movable member 62 and the connection member 61 are separated from each other, one end of the second capacitor 131d may not be connected to the inductor unit 14.

The first movement limiting member 63 and the second movement limiting member 64 may limit the movement of the movable member 62 in the first axis (Z) direction. When the stylus pen 10 applies pressure to the touch screen 30, the movable member 62 may be moved in the first axis (Z) direction. At this time, the first movement limiting member 63 and the second movement limiting member 64 may protect the plurality of capacitors 131a to 131d from the movement of the movable member 62 in the first axis (Z) direction.

The first movement limiting member 63 may contact the movable member 62 in the first axis (Z) direction of the movable member 62. The second movement limiting member 64 may contact the first movement limiting member 63 in the first axis (Z) direction of the first movement limiting member 63.

When the stylus pen 10 applies pressure to the touch screen 30, the second movement limiting member 64 and the first movement limiting member 63 may come into tight contact. At this time, in order to relieve the impact applied from the first movement limiting member 63 to the second movement limiting member 64, the second movement limiting member 64 may be formed in a hemispherical shape. In this case, the shape of the second movement limiting member 64 is not limited to the hemispherical shape, and may be an ellipse shape rather than the hemispherical shape.

In a certain exemplary embodiment, the first movement limiting member 63 may be formed in a rectangular parallelepiped shape. By forming the first movement limiting member 63 in the rectangular parallelepiped shape, the pressure exerted by the first movement limiting member 63 on the second movement limiting member 64 can be distributed.

The inductor unit 14 may include a ferrite core 15 through which the core body 17 penetrates and a coil 16 wound around an outer surface of the ferrite core 15. The coil 16 wound around the outer surface of the ferrite core 15 may be connected to one ends and the other ends of the first capacitors 131a, 131b, and 131c. Also, the coil 16 wound around the outer surface of the ferrite core 15 may be connected to the other end of the second capacitor 131d.

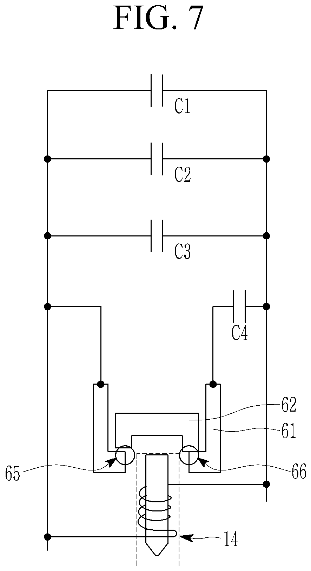

FIG. 7 is a diagram illustrating a state where a connection member and a movable member contact each other in a hovering state.

Before explaining FIG. 7, the hovering state may refer to a state in which the stylus pen 10 of FIG. 1 is not in contact with the touch screen 30 of FIG. 1. However, the distance between the stylus pen 10 and the electronic device 20 of FIG. 1 may be close enough to transmit and receive an electromagnetic signal E and/or B. That is, the resonant circuit unit 12 of FIG. 5 of the stylus pen 10 may receive a magnetic signal from the electronic device 20 of FIG. 1.

The hovering state may also mean that the stylus pen 10 is in contact with the touch screen 30, but pressure corresponding to a weight less than about +1 g of the weight of the stylus pen is applied to the touch screen 30. On the other hand, the contact state may refer to a state in which pressure corresponding to a weight larger than or equal to about +1 g of the weight of the stylus pen 10 is applied to the touch screen 30.

The stylus pen 10 in the hovering state may perform a different function from the stylus pen 10 in the contact state. The stylus pen 10 in the hovering state may adjust a cursor position or perform a specific function without physical contact with the touch screen 30. For example, in the hovering state, a cursor or pointer may be displayed on a screen to visually confirm the position of the pen. Some software may also display preview information for tools or menus. In addition, a function different from that in the contact state may be provided in the hovering state, such as switching a screen by making a specific gesture such as swiping.

Referring to FIG. 7, the stylus pen 10 in the hovering state may not be in contact with the touch screen (FIG. 30). Accordingly, the connection member 61 may be in contact with the movable member 62, and the second signal line 612 of FIG. 6 and the third signal line 621 of FIG. 6 may be electrically connected to each other through the first contact area 65 and the second contact area 66. All of one ends and the other ends of first to third capacitors C1 to C3 may be connected to the inductor unit 14. However, one end of a fourth capacitor C4 may be connected to the connection member 61, and the other end of the fourth capacitor C4 may be connected to the inductor unit 14.

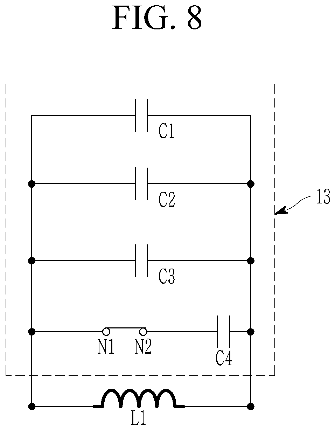

FIG. 8 is a circuit diagram of a stylus pen in a hovering state according to a comparative example.

Referring to FIGS. 7 and 8, a first contact N1 and a second contact N2 may be electrically connected to each other. Accordingly, the fourth capacitor C4 may be connected to the first to third capacitors C1 to C3 in parallel. As the fourth capacitor C4 is connected to the capacitor unit 13 of FIG. 5 in parallel, the capacitance of the capacitor unit 13 may be changed.

In the hovering state, the resonant circuit unit 12 of FIG. 5 of the stylus pen 10 of FIG. 1 may resonate based on the changed capacitance of the capacitor unit 13. At this time, the capacitance of the resonant circuit unit 12 may be calculated based on the capacitances of the first to fourth capacitors C1 to C4 connected in parallel. The electronic device 20 of FIG. 1 may receive a resonant electromagnetic signal E and/or B from the stylus pen 10. The electronic device 20 may receive an input from the stylus pen 10 in the hovering state based on the resonant electromagnetic signal E and/or B.

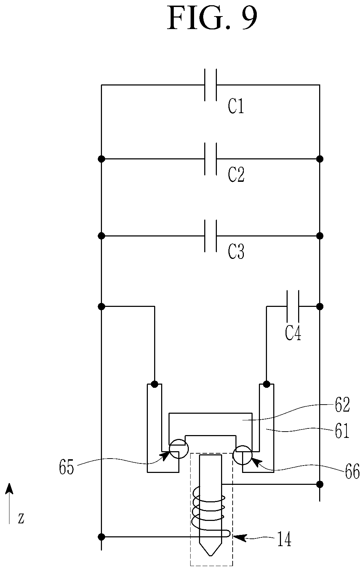

FIG. 9 is a diagram illustrating a state in which a connection member and a movable member contact each other in a hovering state.

Referring to FIG. 9, the stylus pen 10 of FIG. 1 in the hovering state may not be in contact with the touch screen 30 of FIG. 1. However, the connection member 61 may be in contact with the movable member 62 through the second contact area 66, but not through the first contact area 65. Based on the first contact area 65, the connection member 61 and the movable member 62 may be separated from each other. In a certain exemplary embodiment, the connection member 61 and the movable member 62 may be in contact with each other in the hovering state in the first contact area 65, but not in the second contact area 66. However, for convenience of explanation, the explanation will continue assuming that the connection member 61 is in contact with the movable member 62 only through the second contact area 66.

Due to mass-production deviations of the parts of the connection member 61 and the movable member 62 and infiltration of foreign substances, the connection member 61 and the movable member 62 may come into contact with each other in the hovering state only in the second contact area 66 among the first contact area 65 and the second contact area 66. Accordingly, the second signal line 612 of FIG. 6 and the third signal line 621 of FIG. 6 may be disconnected from each other in the first contact area 65.

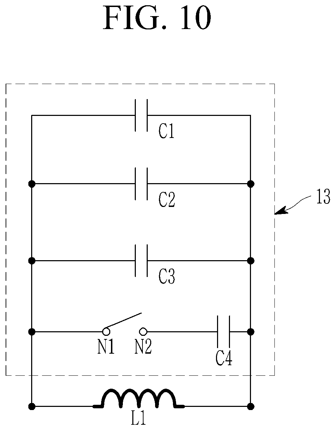

FIG. 10 is a circuit diagram of a stylus pen in a hovering state according to a comparative example.

Referring to FIGS. 9 and 10, the first contact N1 and the second contact N2 may be electrically disconnected from each other. Accordingly, the fourth capacitor C4 may be disconnected from the first to third capacitors C1 to C3. Since the fourth capacitor C4 is disconnected from the capacitor unit 13 of FIG. 5, the capacitance of the capacitor unit 13 in FIG. 10 may be different from the capacitance of the capacitor unit 13 in FIG. 8.

The resonant circuit unit 12 of FIG. 5 of the stylus pen 10 of FIG. 1 may resonate based on the capacitance of the capacitor unit 13. At this time, a capacitance of the resonant circuit unit 12 may be calculated based on capacitances of the first to third capacitors C1 to C3 connected in parallel. The stylus pen 10 may transmit a resonant electromagnetic signal E and/or B in the contact state to the electronic device 20 of FIG. 1 even in the hovering state. Accordingly, a defect may occur in which the electronic device 20 receives an input from the stylus pen 10 in the contact state.

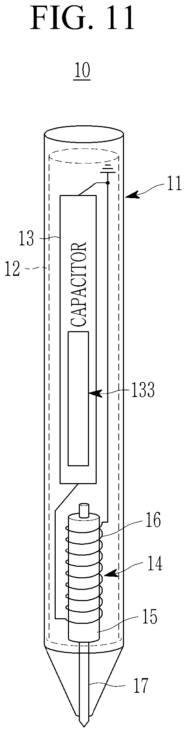

FIG. 11 is a diagram illustrating a stylus pen according to an exemplary embodiment.

Referring to FIG. 11, the stylus pen 10 may include the same components as the stylus pen 10 of FIG. 5. However, unlike the stylus pen 10 of FIG. 5, the stylus pen 10 may include a connection unit 133 in the capacitor unit 13.

The connection unit 133 may connect the capacitor unit 13 and the inductor unit 14 to each other. The connection unit 133 may include an elastic member that is both elastic and electrically conductive. As an example, the elastic member may include a spring made of a metal material such as stainless steel. The elastic member may be disposed between any one of the plurality of capacitors 131a to 131d of FIG. 6 included in the capacitor unit 13 and the connection member 61 of FIG. 6.

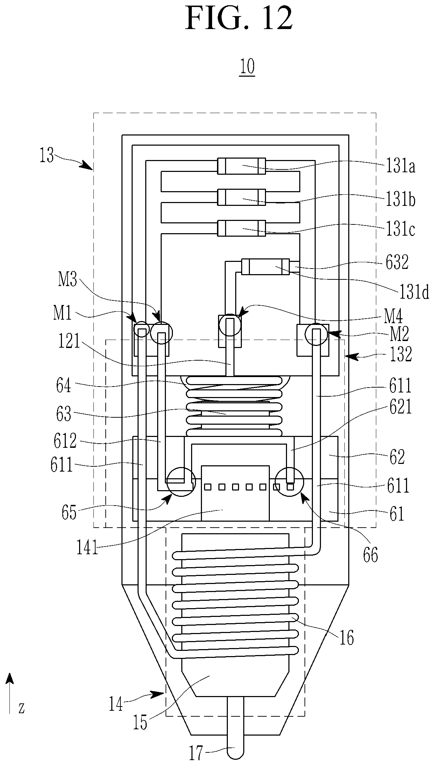

FIG. 12 is a diagram illustrating a stylus pen according to an exemplary embodiment.

The stylus pen 10 of FIG. 12 may include the same components as the stylus pen 10 or FIG. 6. However, the stylus pen 10 may additionally include an elastic member 121, when compared to the stylus pen 10 or FIG. 6. The stylus pen 10 will be described, focusing on the elastic member 121.

The elastic member 121 may be connected to the fifth signal line 632 through a fourth contact M4. The second capacitor 131d may be disposed on the fifth signal line 632, and the elastic member 121 may be electrically connected to one end of the second capacitor 131d. The other end of the second capacitor 131d may be connected to the inductor unit 14 through the second contact M2.

The elastic member 121 is disposed between the fourth contact M4 and the movable member 62, and may be in contact with the movable member 62. The elastic member 121 may be electrically connected to the third signal line 621 included in the movable member 62. Accordingly, one end of the second capacitor 131d may be electrically connected to the inductor unit 14.

The third signal line 621 may be electrically connected to the second signal line 612 through the first contact area 65 and the second contact area 66. At this time, even if the third signal line 621 is connected to the second signal line 612 in only one of the first contact area 65 and the second contact area 66, one end of the second capacitor 131d may be electrically connected to the inductor unit 14.

The movable member 62 may compress the elastic member 121 in the first axis (Z) direction, and the movable member 62 may move in the first axis (Z) direction according to the degree of compression of the elastic member 121 compressed in the first axis (Z) direction. The elastic member 121 may control a movement distance of the movable member 62 by adjusting the strength of the metal material, and at this time, the strength of the metal material and the movement distance of the movable member 62 may be inversely proportional.

When the stylus pen 10 applies pressure to the touch screen 30 of FIG. 1, the pressure transmitted to the core body 17 is transmitted to the movable member 62 through the inductor connecting unit 141, and the movable member 62 may compress the elastic member 121 in the first axis (Z) direction. At this time, the movable member 62 may be separated from the connection member 61, and the third signal line 621 and the first and second signal lines 611 and 612 may be electrically disconnected from each other. Accordingly, one end of the second capacitor 131d and the inductor unit 14 may be disconnected from each other.

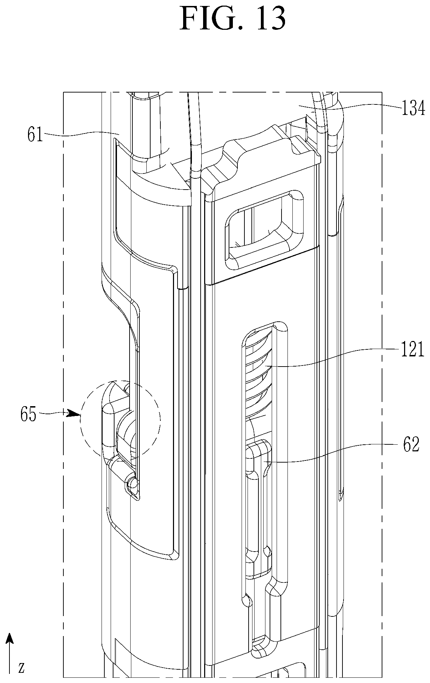

FIG. 13 is a diagram illustrating a pen pressure sensing unit and a connection unit of a stylus pen.

Referring to FIG. 13, the pen pressure sensing unit 132 of FIG. 12 may include a connection member 61 and a movable member 62. The connection unit 133 of FIG. 11 may include an elastic member 121. The connection member 61 and the movable member 62 may come into contact with each other in the first contact area 65. For convenience of explanation, the second contact area 66 of FIG. 12 is omitted.

The connection member 61 may be formed to surround outer edges of a capacitor area 134, the elastic member 121, and the movable member 62 along the first axis (Z) direction. The elastic member 121 may be disposed between the capacitor area 134 and the movable member 62. The capacitor area 134 may be connected to an upper end of the elastic member 121 in the first axis (Z) direction. The movable member 62 may be connected to a lower end of the elastic member 121 in the first axis (Z) direction.

When the stylus pen 10 applies pressure to the touch screen 30 of FIG. 1, the movable member 62 may be moved in the first axis (Z) direction. The movable member 62 may compress the elastic member 121 in the first axis (Z) direction. In addition, the movable member 62 may be separated from the connection member 61, not contacting the connection member 61, in the first contact area 65.

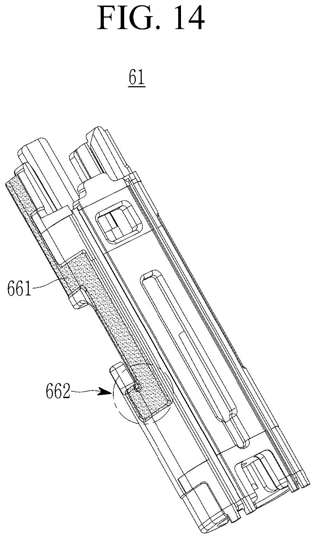

FIG. 14 is a diagram illustrating a connection member.

Referring to FIG. 14, the connection member 61 may include a conductive area 661 and a contact area 662. The conductive area 661 may refer to an area coated or plated with a conductor material. The conductor may include a metal such as copper, aluminum, or silver, and a non-metal such as graphite.

The contact area 662 may include an area where the connection member 61 comes into contact with the movable member 62 of FIG. 13. The contact area 662 may also be coated or plated with a conductor material. When the connection member 61 comes into contact with the movable member 62, current may flow to the contact area 662 through the conductive area 661. For example, charges accumulated in the capacitor unit 13 in FIG. 13 may be transferred from the conductive area 661 to the contact area 662 through the second signal line 612 of FIG. 12. Alternatively, charges may be transferred from the contact area 662 to the capacitor unit 13 of FIG. 13 through the conductive area 661 and the second signal line 612.

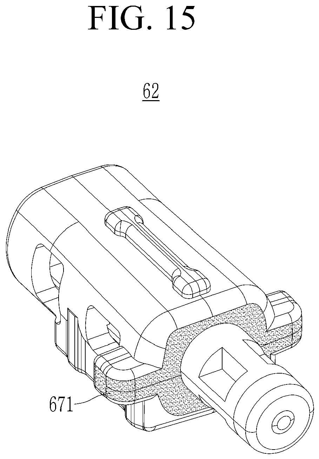

FIG. 15 is a diagram illustrating a movable member.

Referring to FIG. 15, the movable member 62 may include a conductive area 671. The conductive area 671 may refer to an area coated or plated with a conductor material. The conductor may include a metal such as copper, aluminum, or silver, and a non-metal such as graphite.

The conductive area 671 may include an area where the movable member 62 comes into contact with the connection member 61 of FIG. 14. When the movable member 62 comes into contact with the connection member 61, current may flow through the conductive area 671. For example, charges accumulated in the capacitor unit 13 of FIG. 13 may be transferred to the conductive area 671 through the second signal line 612 of FIG. 12 and the third signal line 621 of FIG. 12. Alternatively, charges may be transferred from the conductive area 671 to the capacitor unit 13 via the second signal line 612 and the third signal line 621.

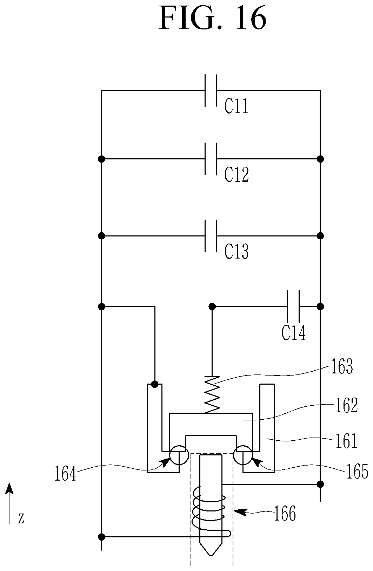

FIG. 16 is a diagram illustrating a stylus pen in which a connection member and a movable member are in contact with each other according to an exemplary embodiment.

Referring to FIG. 16, the stylus pen 10 of FIG. 1 in the hovering state may be in a state where no pressure is applied to the touch screen 30 of FIG. 1. Accordingly, a connection member 161 may be in contact with a movable member 162 through a first contact area 164 and a second contact area 165.

Both one ends and the other ends of first to third capacitors C11, C12, and C13 may be connected to an inductor unit 166. However, one end of a fourth capacitor C14 may be connected to an elastic member 163, and the other end of the fourth capacitor C14 may be connected to the inductor unit 166. Since the connection member 161 and the movable member 162 are in contact with each other, the second signal line 612 of FIG. 12 and the third signal line 621 of FIG. 12 may be electrically connected to each other.

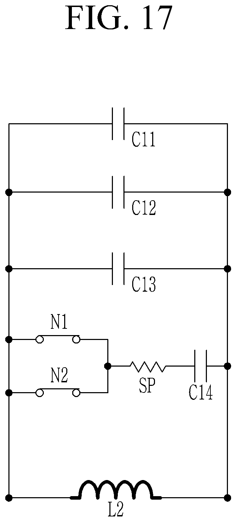

FIG. 17 is a circuit diagram of a stylus pen in a hovering state according to an exemplary embodiment.

Referring to FIGS. 16 and 17, an elastic member SP may be connected to the fourth capacitor C14 in series, and the first contact N1 and the second contact N2 may be connected to the elastic member SP in series. At this time, the first contact N1 and the second contact N2 may be connected to each other in parallel. Since the first contact N1 and the second contact N2 are not opened, the fourth capacitor C14 may be connected to the first to third capacitors C11, C12, and C13 in parallel through the first contact N1 or the second contact N2.

In the hovering state, the resonant circuit unit 12 of FIG. 11 of the stylus pen 10 of FIG. 1 may resonate based on a capacitance of the capacitor unit 13 of FIG. 11. At this time, the capacitance of the resonant circuit unit 12 may be calculated based on capacitances of the first to fourth capacitors C1 to C4 connected in parallel. The electronic device 20 of FIG. 1 may receive a resonant electromagnetic signal E and/or B from the stylus pen 10 of FIG. 1. The electronic device 20 may receive an input from the stylus pen 10 in the hovering state based on the resonant electromagnetic signal E and/or B.

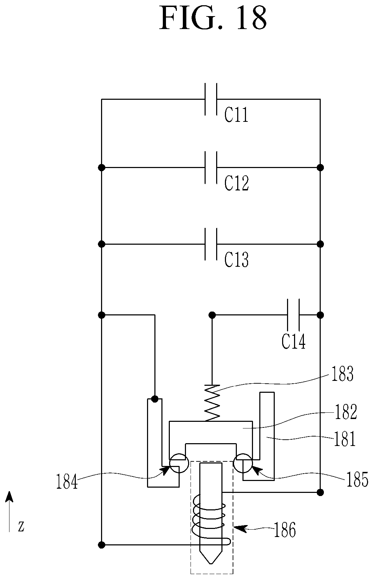

FIG. 18 is a diagram illustrating a stylus pen in which a connection member and a movable member are in contact with each other according to an exemplary embodiment.

Referring to FIG. 18, the stylus pen 10 of FIG. 1 in the hovering state may be in a state where no pressure is applied to the touch screen 30 of FIG. 1. However, due to mass-production deviations of parts of a connection member 181 and a movable member 182 and infiltration of foreign substances, the connection member 181 and the movable member 182 may come into contact with each other in the hovering state only in a second contact area 185 among a first contact area 184 and the second contact area 185.

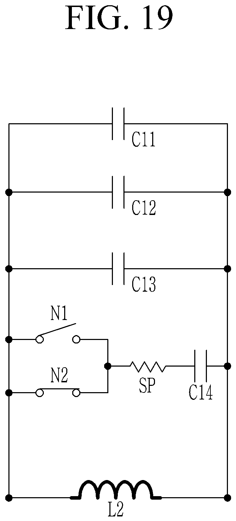

FIG. 19 is a circuit diagram of a stylus pen in a hovering state according to an exemplary embodiment.

Referring to FIGS. 18 and 19, the elastic member SP may be connected to the fourth capacitor C14 in series, and the first contact N1 and the second contact N2 may be connected to the elastic member SP in series. At this time, the first contact N1 and the second contact N2 may be connected to each other in parallel.

Since the first contact N1 and the second contact N2 are connected to each other in parallel, even if either the first contact N1 or the second contact N2 is opened, the fourth capacitor C14 may be connected to the capacitor unit 13 of FIG. 12. For example, even if the first contact N1 is opened, the fourth capacitor C14 may be connected to the first to third capacitors C11, C12, and C13 in parallel through the second contact N2. On the other hand, even if the second contact N2 is opened, the fourth capacitor C14 may be connected to the first to third capacitors C11, C12, and C13 in parallel through the first contact N1.

By arranging the first contact N1 and the second contact N2 in parallel, the fourth capacitor C14 may be connected to the capacitor unit 13 even if either the first contact N1 or the second contact N2 is opened due to a defect in the hovering state.

In the hovering state, the resonant circuit unit 12 of FIG. 11 of the stylus pen 10 of FIG. 1 may resonate based on a capacitance of the capacitor unit 13. At this time, a capacitance of the resonant circuit unit 12 may be calculated based on capacitances of the first to fourth capacitors C11, C12, C13, and C14 connected in parallel. The electronic device 20 of FIG. 1 may receive a resonant electromagnetic signal E and/or B from the stylus pen 10. The electronic device 20 may receive an input from the stylus pen 10 in the hovering state based on the resonant electromagnetic signal E and/or B.

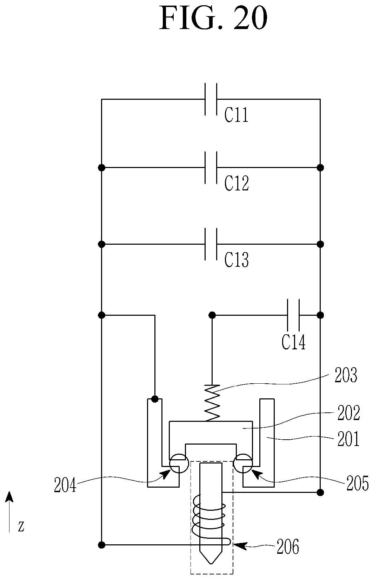

FIG. 20 is a diagram illustrating a stylus pen in which a connection member and a movable member are separated from each other according to an exemplary embodiment.

Referring to FIG. 20, the stylus pen 10 of FIG. 1 in the contact state may be in a state where the stylus pen 10 applies pressure corresponding to a weight larger than or equal to +1 g of the weight of the stylus pen 10 to the touch screen 30 of FIG. 1. The inductor connecting unit 141 of FIG. 12 may move a movable member 202 in the first axis (Z) direction. The movable member 202 may compress an elastic member 203 in the first axis (Z) direction, and may be separated from a connection member 201. Accordingly, the second signal line 612 of FIG. 12 and the third signal line 621 of FIG. 12 may be disconnected from each other.

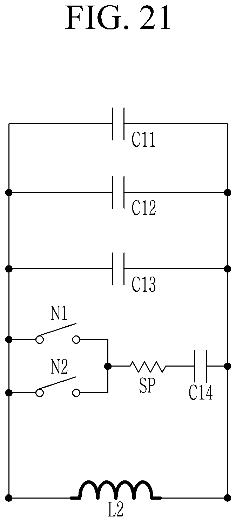

FIG. 21 is a circuit diagram of a stylus pen in a contact state according to an exemplary embodiment.

Referring to FIGS. 20 and 21, the elastic member SP may be connected to the fourth capacitor C14 in series, and each of the first contact N1 and the second contact N2 may be connected to the elastic member SP in series. At this time, the first contact N1 and the second contact N2 may be connected to each other in parallel.

In the contact state, both the first contact N1 and the second contact N2 may be opened. As both the first contact N1 and the second contact N2 are opened, the fourth capacitor C14, the inductor L2, and the capacitors C11, C12, and C13 may be disconnected from each other. Accordingly, the first to third capacitors C11, C12, and C13, excluding the fourth capacitor C14, may be connected in parallel.

In the contact state, the resonant circuit unit 12 of FIG. 11 of the stylus pen 10 of FIG. 1 may resonate based on a capacitance of the capacitor unit 13 of FIG. 11. At this time, a capacitance of the resonant circuit unit 12 may be calculated based on capacitances of the first to third capacitors C11, C12, and C13 connected in parallel. The electronic device 20 of FIG. 1 may receive a resonant electromagnetic signal E and/or B from the stylus pen 10. The electronic device 20 may receive an input from the stylus pen 10 in the contact state based on the resonant electromagnetic signal E and/or B.

Although the exemplary embodiments of the present disclosure have been described in detail above, the scope of the present disclosure is not limited thereto, and various modifications and improvements made by those skilled in the art using the basic concept of the present disclosure defined in the following claims also fall within the scope of the present disclosure.

## Claims

1. A stylus pen comprising:
an inductor unit; and
a capacitor unit including a plurality of first capacitors connected to the inductor unit in parallel, a connection member including a first signal line connected to one end of each of the plurality of first capacitors, a movable member including a second signal line connected to the first signal line when contacting the connection member, a conductive elastic member connected to the second signal line, and a second capacitor connected between the elastic member and the other end of each of the plurality of first capacitors.

2. The stylus pen of claim 1, wherein
the inductor unit includes:
a ferrite core; and
a coil wound around an outer surface of the ferrite core, one end of the coil being connected to one end of each of the plurality of first capacitors, and the other end of the coil being connected to the other end of each of the plurality of first capacitors.

3. The stylus pen of claim 2, further comprising:
a core body penetrating through the ferrite core,
wherein pressure transmitted to one side of the core body is transmitted to the movable member.

4. The stylus pen of claim 3, wherein
when the pressure exceeds a first reference value, the elastic member is compressed by the movable member.

5. The stylus pen of claim 4, wherein
when the elastic member is compressed, the movable member and the connection member are separated from each other, and the first signal line and the second signal line are electrically disconnected from each other.

6. The stylus pen of claim 3, further comprising:
an inductor moving unit connected to the other side of the core body, penetrating through the connection member to contact the movable member, and transmitting the pressure to the movable member.

7. The stylus pen of claim 1, wherein
the connection member includes a contact area as the first signal line,
the movable member includes a conductive area as the second signal line, and
when the movable member contacts the connection member, the contact area and the conductive area are electrically connected to each other.

8. The stylus pen of claim 1, wherein
the elastic member includes a spring made of a metal material.

9. The stylus pen of claim 1, wherein
the capacitor unit further includes a movement limiting member that limits a movement of the movable member.

10. The stylus pen of claim 9, wherein
the movement limiting member includes a first movement limiting member and a second movement limiting member being in contact with the first movement limiting member at the upper end of the first movement limiting member.

11. A touch system comprising:
a stylus pen including an inductor unit including an inductor connecting unit, and a capacitor unit including a movable member moved by the inductor connecting unit and an elastic member connected to the movable member at an upper end of the movable member; and
a touch screen including a touch electrode layer receiving a resonate electromagnetic signal from the stylus pen.

12. The touch system of claim 11, wherein
the stylus pen further includes a connection member connecting the inductor unit and the capacitor unit, and the connection member is formed to contact the movable member at an upper end of the movable member.

13. The touch system of claim 12, wherein
the connection member and the movable member come into contact with each other in a first contact area and a second contact area different from the first contact area based on pen pressure of the stylus pen, and the first contact area and the second contact area are plated with a conductive material.

14. The touch system of claim 13, wherein
when the pen pressure of the stylus pen exceeds a first reference value, the connection member and the movable member are separated from each other.

15. The touch system of claim 13, wherein
when the pen pressure of the stylus pen is lower than or equal to a first reference value, the connection member and the movable member are in contact with each other in the first contact area and/or the second contact area, and a plurality of capacitors included in the capacitor unit are electrically connected to the inductor unit.

16. The touch system of claim 15, wherein
the plurality of capacitors include a first capacitor connected to the elastic member, and the first capacitor is connected to the inductor unit through the elastic member, the movable member, and the connection member.

17. A stylus pen comprising:
a capacitor area including a plurality of capacitors;
an elastic member located at a lower end of the capacitor area and contacting the capacitor area;
a movable member located at a lower end of the elastic member and connected between the elastic member and an inductor unit;
a connection member formed to surround outer edges of the capacitor area, the elastic member, and the movable member; and
a contact area where the movable member and the connection member come into contact with each other.

18. The stylus pen of claim 17, wherein
the elastic member includes a spring made of a metal material.

19. The stylus pen of claim 18, wherein
the connection member includes a conductive area connected to the capacitor area and plated with a conductive material.

20. The stylus pen of claim 19, wherein
charges accumulated in the capacitor area are transferred to the contact area through the conductive area.
